# EUROPEAN PATENT APPLICATION

(11) **EP 2 065 827 A2**
(43) Date of publication of application: **03.06.2009**
(21) Application number: 08169760.9
(22) Date of filing: 24.11.2008
(51) Int. Cl.: G06F 21/00

(54) **Right objects acquisition method and apparatus**

(30) Priority: 26.11.2007 KR 20070120819
(71) Applicant: Samsung Electronics Co., Ltd., Suwon-si, Gyeonggi-Do (KR)
(72) Inventor: Lee, Kyung Keun, Suwon-si Gyeonggi-do (KR); Lee, Kook Heui, Suwon-si Gyeonggi-do (KR); Lee, Joon Taek, Suwon-si Gyeonggi-do (KR); Choi, Tae Hwa, Suwon-si Gyeonggi-do (KR)
(74) Representative: Harrison Goddard Foote

(57) **Abstract**

A license acquisition method and apparatus for a DRM-enabled mobile terminal is provided for acquiring licenses for multiple right-protected content items in a batch processing manner. The rights objects acquisition method for a mobile terminal supporting digital rights management according to the present invention includes attempting download of at least one acquisition-requested rights object, classifying the at least one acquisition-requested rights object into download-succeeded rights objects and download-failed rights objects, and outputting information on the downloaded-succeeded rights objects and download-failed rights objects.

## Description

### TECHNICAL FIELD OF THE INVENTION

The present invention relates to digital rights management (DRM) and, in particular, to a license acquisition method and apparatus for a DRM-enabled mobile terminal that is capable of acquiring licenses for multiple right-protected content items, aggregately.

### BACKGROUND OF THE INVENTION

Digital rights management (DRM) refers to access control technologies that protect the intellectual property of the distributed digital media by limiting usage of digital media using encryption techniques. DRM provides a system for preventing the digital contents through all the phases of creation, distribution, use, and abrogation.

Typically, a DRM content object can be accessed unlimitedly but requires a license, called a rights object (RO), for decrypting its encrypted content so as to efficiently protect the digital contents from illegal use.

With the encryption of the content, the DRM content object can be protected through all the phases of creation, distribution, use, and abrogation. Since DRM content object is decrypted with a valid decryption key provided within the RO, the encrypted contents can be protected though the DRM content object is freely distributed.

The RO is stored separately stored with the digital content within a device and the use of the digital content may be permitted or restricted with reference to the RO. The RO contains constraint information for restricting use of the digital content. For example, if an MP3 file is purchased along with an RO having a count constraint set to 10, the purchaser can play the MP3 file 10 times. Whenever the MP3 file is played, a count decrements by 1. If the count reaches zero, the RO should be repurchased for playing the MP3 file. This RO repurchasing procedure is called an RO update.

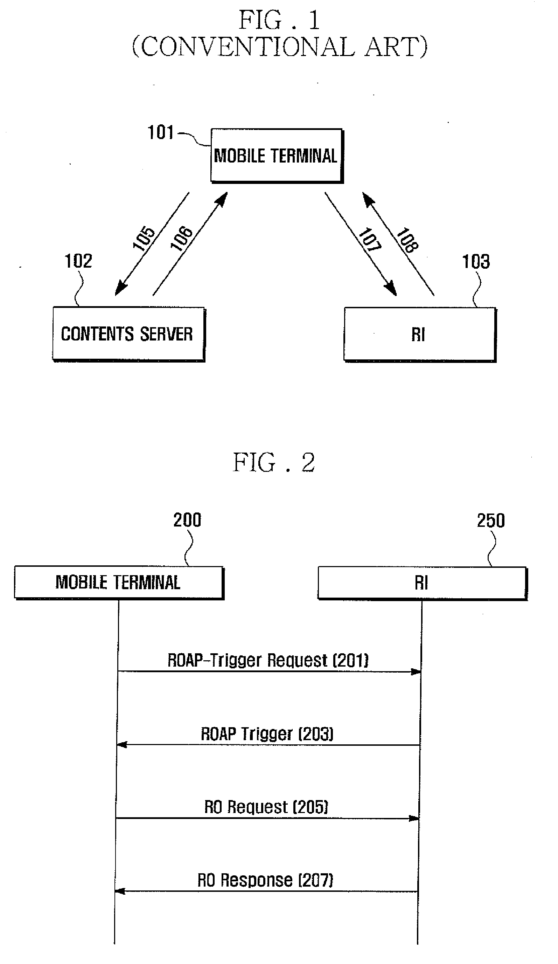

FIG. 1 is a schematic diagram illustrating an RO purchase procedure in a conventional DRM system.

In FIG. 1, a mobile terminal 101 connects to a contents server 102 and sends a content request message to the contents server 102 (S105). Upon receipt of the purchase request message, the contents server 102 sends a content item indicated by the content request message to the mobile terminal 101 (S106). Here, the content item is a DRM-protected content item.

After receiving the content item from the contents server 102, the mobile terminal 101 sends a license request message for requesting a license of the content item to a right issuer (RI) 103 (S107). Here, a license is an object that contains a decryption key to decrypt the encrypted content of the content item and usage rule (e.g., usage count and usage period). Accordingly, in order to use a DRM-protected content item, the user must acquire a valid license of the DRM-protected content item.

Upon receipt of the license request message, the RI authenticates the user. If the user has been authenticated as a valid user, the RI 103 issues the license to the mobile terminal 101 (S108). The license contains a decryption key and a description of the rights to the content item.

The mobile terminal 101 plays the content item downloaded from the contents server102 using the license issued by the RI 103. In more detail, the mobile terminal 101 extracts the decryption key and description of the rights from the license and checks the playback count, and/or playback period from the description of the rights. Next, the mobile terminal 101 decrypts the content item using the decryption key if the usage rights are not exhausted.

When it is required to acquire or update ROs for a plurality of contents items, the user has to repeat the RO acquisition processes for respective contents items. That is, the RO acquisition or update process is performed for each content item.

Accordingly, in order to acquire ROs for multiple contents items, the user should repeat the RO acquisition procedures as many times as the number of the contents items. That is, the user must repeat selecting a content item and acquiring the RO of the selected item from the RI until the ROs for all contents items that user wants to acquire or update their ROs.

For example, in a case that the time constraints for multiple contents items such as an MP3 file, a video file, and a game application have expired and the user want to update the time constraints for all the contents items, the user must update the constraints one by one. This conventional repetitive time-consuming ROs acquisition process results in user inconvenience and wasted time.

### SUMMARY OF THE INVENTION

To address the above-discussed deficiencies of the prior art, it is a primary object to provide an enhanced RO acquisition method and apparatus that is capable of efficiently acquiring multiple ROs.

Also, the present invention provides an enhanced RO acquisition method and apparatus that is capable of improving user convenience by acquiring a plurality of ROs for multiple contents items through a batch acquisition process.

In accordance with an exemplary embodiment of the present invention, a rights objects acquisition method for a mobile terminal supporting digital rights management includes attempting a download of at least one acquisition-requested rights object, classifying the at least one acquisition-requested rights object into a download-succeeded rights objects and a download-failed rights objects, and outputting an information on the downloaded-succeeded rights objects and download-failed rights objects.

In accordance with another exemplary embodiment of the present invention, a rights objects acquisition method for a mobile terminal supporting digital rights management includes attempting a download of a plural acquisition-requested rights objects, checking a download status of the acquisition-requested rights objects, displaying, when all the acquisition-requested rights objects have successfully downloaded, at least one content item corresponding to the download-succeeded rights objects in a preset display mode, displaying, when some of the acquisition-requested rights objects have successfully downloaded and the others have not, one or more contents items corresponding to the download-succeeded rights objects and download-failed rights objects distinguishably from each other in a preset display mode, and displaying, when all the acquisition-requested rights objects have failed to download, at least one content item corresponding to the download-failed rights objects in a preset display mode.

In accordance with another exemplary embodiment of the present invention, a rights objects acquisition method for a mobile terminal supporting digital rights management includes checking one or more download-succeeded rights objects that have successfully downloaded and one or more download-failed rights objects that have failed to download; pre-playing a pre-play part of a content object corresponding to one of download-failed rights objects in response to a pre-play command; analyzing a cause of download failure of the download-failed rights object; determining whether a download of the download-failed rights object is available; retrying, when the download of the download-failed rights object is available, download of the download-failed rights object; and outputting, when the download of the download-failed rights object is not available, an alert message for notifying that the download is unavailable.

In accordance with another exemplary embodiment of the present invention, a mobile terminal includes a radio frequency unit which is responsible for receiving radio signals carrying one or more contents objects and one or more rights objects for the contents objects, a memory unit which stores a user interface to enable acquiring multiple rights objects for the contents objects at one time, the one or more contents objects, an information of the contents objects, and the one or more rights objects, a display unit which displays one or more screen images of the user interface, a web browsing application, and a download progress status, and a control unit which controls acquiring rights objects and outputting one or more alert messages for alerting success and failure of downloading the rights objects.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 is a schematic diagram illustrating an RO purchase procedure in a conventional DRM system;

FIG. 2 is a message flow diagram illustrating an RO acquisition method according to an exemplary embodiment of the present invention;

FIG. 3 is a block diagram illustrating a configuration of a mobile terminal according to an exemplary embodiment of the present invention;

FIG. 4 is diagram illustrating a RO acquisition mode screen for selecting content items in a batch RO acquisition method according to an exemplary embodiment of the present invention;

FIG. 5 is a diagram illustrating steps of a batch RO acquisition method according to an exemplary embodiment of the present invention;

FIG. 6 is a flowchart illustrating a batch RO acquisition procedure of an RO acquisition method according to an exemplary embodiment of the present invention;

FIG. 7 is a flowchart illustrating a contents objects display procedure of an RO acquisition method according to an exemplary embodiment of the present invention;

FIG. 8 is a flowchart illustrating a download-failed RO acquisition procedure of an RO acquisition method according to an exemplary embodiment of the present invention; and

FIG. 9 is a flowchart illustrating a download-failed RO processing procedure of an RO acquisition method according to an exemplary embodiment of the present invention.

### DETAILED DESCRIPTION OF THE INVENTION

FIGURES 2 through 9, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged mobile terminal.

In the following descriptions, the term "batch acquisition" is used to refer to a process for acquiring a plurality rights objects (ROs) in batch processing manner. In order to accomplish the batch acquisition of multiple ROs, the present invention provides a novel user interface of a mobile terminal.

In the following descriptions, the batch RO acquisition can be done for acquiring ROs for newly acquired contents items and/or updating the expired ROs. In order to simplify the explanation, the term "acquisition" is used interchangeably with "update".

In the following description, the mobile terminal can be any of information devices that support data communication with network elements (e.g., contents server and RI) via wired or wireless communication network, such as a cellular phone, an MP3 player, a digital broadcast receiver, a personal digital assistant (PDA), a laptop computer, a palmtop computer, and their equivalent devices.

FIG. 2 is a message flow diagram illustrating an RO acquisition method according to an exemplary embodiment of the present invention.

Referring to FIG. 2, when an RO acquisition command requesting at least one DRM content item is input by a user, the mobile terminal 200 generates and sends a Rights Object Acquisition Protocol Trigger Request (ROAP Trigger Request) message to the RI 250 (S201). The ROAP Trigger Request message may contain at least one content identifier (CID) for the at least one DRM content item, a device ID (DeID) of the mobile terminal 200, and constraints per DRM content item for limiting usage rights for each DRM content item.

In a case that at least two ROs have an identical parent RO, the ROAP Trigger Request message may contain the information about the parent RO. For example, when requesting ROs for track 1 and track 3 of a music album A, the mobile terminal 200 may add an album ID as a parent CID within the ROAP Trigger Request message in addition to the child CIDs of the tracks 1 and 3.

In this case, the mobile terminal 200 can acquire the RO for the album A which allows using either track 1 or track 3. By depending the constraints in the ROs for the tracks 1 and 3 on the constraint for the album A, the tracks 1 and 3 can be played until the constraint for the album A expires. Accordingly, the user may use either the track 1 and track 3 up to the times limited by the constraint for the album A regardless of individual constraints for the tracks 1 and 3.

Such a shared constraint can be applied for acquiring ROs for the contents items belonged to different parent content items. For example, the user can make a group of content items in the form of a list such as "my list", "most frequently used list", and "favorite list" and designates the list as a parent content item. In this case, the constraints of ROs for the content items grouped into the parent content item are dependent on the constraint of the RO for the parent content item.

In the meantime, the mobile terminal 200 activates a web browser to show a webpage indicated by a Uniform Resource Locator (URL) information of the RI 250 which is contained in the header of the DRM content item. In this embodiment, a DRM content format (DCF) provides fields for containing URL information on at least one RI supporting the batch RO acquisition, such as BatchRIURL and BatchRIURLLength.

The URL information fields can be arranged in a part of the DCF. For example, the URL information fields can be added within the common header of the DCF structure or included in an extended header field located in the common header. However, the present invention is not limited thereto. For example, the batch RO acquisition can be accomplished without adding the BatchRIURL within the DCF structure.

The mobile terminal 200 can select the RI 250 for acquiring the ROs for at least one DRM content item with reference to RI URLs stored in its memory and open a webpage of the URL. The mobile terminal 200 also can request the RI 250 for an RI URL from which the ROs for the at least one DRM content item can be acquired. The RI URL received from the RI 250 is stored in the memory for RO acquisition process afterward.

Returning to FIG. 2, upon receipt of the ROAP Trigger Request message, the RI 250 generates and sends an ROAP Trigger message to the mobile terminal 200 (S203). The ROAP Trigger message contains RO price information for the at least one DRM content item. The ROAP Trigger message also contains at least one RO identifier (roID) assigned to each content item. The ROAP Trigger message also contains at least one of RO URL (roapURL), RI ID, RI Alias, Domain ID, Domain Alias, and nonce.

Upon receipt of the ROAP Trigger message, the mobile terminal 200 displays a cost for purchasing the ROs for the at least one DRM content item with reference to the ROAP Trigger message. In response to a user command, the mobile terminal 200 sends an RO Request message to the RI 250 (S205). At this time, the DRM content items for which ROs are requested can be changed according to the user's modification of the list of the DRM content items.

Upon receipt of the RO Request message, the RI 250 generates and sends an RO Response message containing the ROs requested by the mobile terminal 200 (S207). Once the RO Response message is received, the mobile terminal 200 extracts the ROs contained in the RO Response message so as to acquire the ROs for multiple DRM content items at one time.

The RO Response message may further contain a Session ID for establishing a session between RI 250 and mobile terminal 200 for checking whether the RO acquisition is successfully completed. In this case, the mobile terminal 200 receives the RO Response message and establishes a session with the RI 250 referring to the Session ID and sends a RO Confirm Request message to the RI 250. The RO Confirm Request message contains a parameter such as an RO Confirm Information for indicating successful RO acquisition.

The RI 250 receives the RO Confirm Request message and may end the RO acquisition procedure or resend the requested RO according to the information contained in the RO Confirm Request message. If it is confirmed that the mobile terminal 200 has acquired the ROs, the RI 250 may send an RO Confirm Response message to the mobile terminal 200.

In this embodiment, the mobile terminal 200 and RI 250 may perform a web transaction after the mobile terminal 200 sends the ROAP Trigger Request message. At this time, the user can set permissions and constraints of ROs for respective content items.

For example, if the RI 250 posts the information on the purchase prices with reference to the CIDs contained in the ROAP Trigger Request message, the mobile terminal 200 sets the permissions and constraints of each RO in response to the user command and sends the information of each RO to the RI 250.

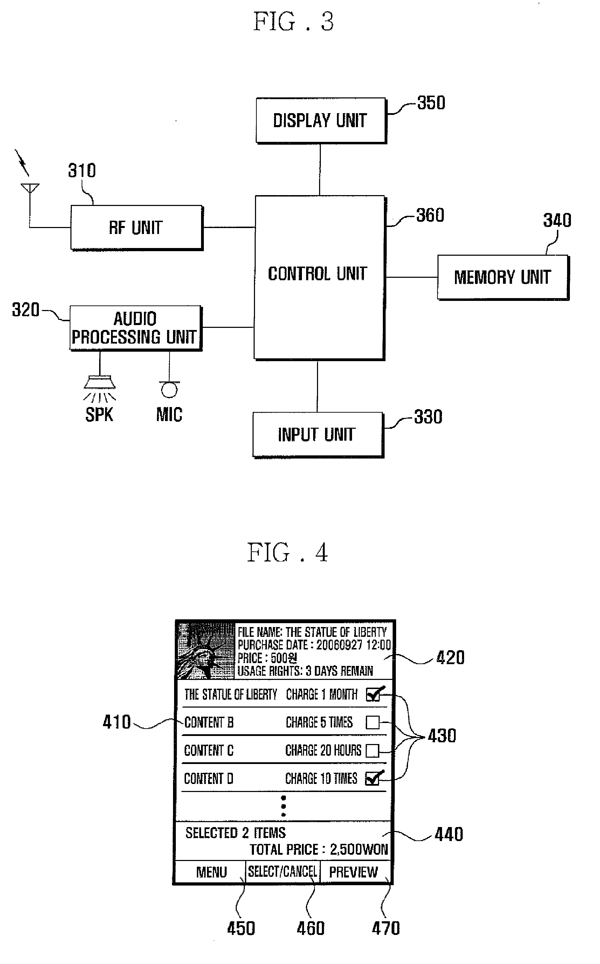

FIG. 3 is a block diagram illustrating a configuration of a mobile terminal according to an exemplary embodiment of the present invention. Although the mobile terminal is depicted as an exemplary mobile phone, the present invention is not limited to a mobile phone.

As shown in FIG. 3, the mobile terminal 200 includes a radio frequency (RF) unit 310, an audio processing unit 320, an input unit 330, a memory unit 340, a display unit 350, and a control unit 360.

The RF unit 310 is responsible for radio communication of the mobile terminal 200. The RF unit 310 establishes a communication channel with a communication system for voice and data communications. Particularly in this embodiment, the RF unit 310 exchanges radio signal carrying the messages related to the RO acquisition procedure with a server. The RF unit 310 includes an RF transmitter for up-converting and amplifying transmission signal frequency and an RF receiver for low noise amplifying and down-converting reception signal frequency.

The RF unit 310 allows the mobile terminal 200 to download DRM contents from a contents server and acquire the ROs required for playing the DRM contents. The RF unit 310 also sends radio signals carrying the ROAP Trigger Request message and RO Request message to an RI and receives the radio signals carrying the ROAP Trigger message and RO Response message transmitted by the RI.

The audio processing unit 320 processes an audio signal to be output through a speaker in the form of audible sound wave and processes the sound wave input through a microphone (MIC) to be output to the control unit 360 in the form an audio signal. Particularly in this embodiment, the audio processing unit 320 can process the audio data contained in a DRM content item to be output in the form of audible sound wave according to the user's intention.

The input unit 330 is provided with a plurality of alphanumeric keys for receiving alphanumeric data and various functions keys for configuring and executing functions of the mobile terminal 200 and sends the key sequences generated by user key input to the control unit 360. The input unit 330 can be implemented with at least one of a touchpad, a keypad, a qwerty keyboard, and a touchscreen.

Particularly in this embodiment, the input unit 330 is configured to generate and send key sequences for selecting an item (including DRM content item and RO) and canceling the selection to the control unit 360. The item selection and selection cancellation can be performed on multiple items listed on an item list according to the user's key manipulation. A DRM content list may be provided with content information (such as content name and genre) and RO information (such as permissions and constraints).

The memory unit 340 stores application programs and data produced by the user or received from other devices such as a contents server, an RI, and other mobile terminals. The data may include still and motion pictures, music files, ROs, and phonebook data. The application programs may include a file playback application program. Particularly, in this embodiment, the application programs include a content manager application for managing and controlling DRM content items. The memory unit 340 may be implemented with at least one buffer for buffering the data generated while the application programs are operating.

Particularly in this embodiment, the memory unit 340 stores DRM content information about DRM content items and RO information about ROs for the DRM content items. The DRM content information includes size, time, name, permitted playback time and count, detailed description, and usage rights of each DRM content item.

The display unit 350 displays application screens showing operation status of various application program, data input by key manipulation, and various operation status indication objects. The display unit 350 is implemented with a liquid crystal display (LCD). In a case that the LCD integrates touchscreen functionality, the display unit 350 can work as a part of the input unit 330.

Particularly in this embodiment, the display unit 350 provides a user interface screen for showing the web browsing and data download progress status in order to allow the user to monitor and control the batch RO acquisition procedure.

The control unit 360 controls general operations of the mobile terminal 200 and signaling among the internal components. That is, the control unit 360 controls the signaling among the RF unit 310, audio processing unit 320, input unit 330, memory unit 340, display unit 350, and other internal components. The control unit 360 may incorporate a data processing unit having a codec and a modem.

Particularly in this embodiment, the control unit 360 is configured to control the batch RO acquisition procedure for acquiring DRM content items and ROs for the DRM content items in batch data processing manner. The control unit 360 also controls a series of presentations of menu screens for facilitating the display of DRM content and RO lists and the selection of items from the list.

The control unit 360 determines success or failure of RO acquisition for each content item and classifies the DRM content items into RO acquisition success and failure groups in the batch RO acquisition procedure. The control unit 360 also controls the display of the content items with information indicating whether the ROs for each content item were successfully acquired or failed in the forms of lists. Particularly, the control unit 360 can instruct that the RO-requested entire content items, RO acquisition-succeeded content items, and RO acquisition-failed content items be displayed separately.

The control unit 360 may be configured to retry acquisition of the failed ROs automatically. In this case, the control unit 360 analyzes the cause of acquisition failure and determines whether to retry the acquisition process according to the analysis result. The operations of the control unit 360 are described later in more detail.

Although the mobile terminal 200 is depicted with basic components of a mobile phone in FIG. 3, the structure of the mobile terminal according to the present invention is not limited thereto. For example, the mobile terminal 200 may further include at least one of a camera module, an electronic settlement module, a local area network (LAN) module, a digital broadcast reception module, and their equivalent function modules. Also, at least one of the internal components of the mobile terminal 200 depicted in FIG. 3 may be omitted or replaced by their equivalent modules.

Until now, basic structures and functions of a mobile terminal according an exemplary embodiment of the present invention have been described. The operations and functions of the above-structured mobile terminal are described hereinafter in more detail in association of a batch RO acquisition method. However, the present invention is not limited to the following exemplary embodiments but can be embodied in various manners.

FIG. 4 is diagram illustrating a RO acquisition mode screen for selecting content items in a batch RO acquisition method according to an exemplary embodiment of the present invention.

Referring to FIG. 4, if a contents list item (e.g., playlist) has been selected from a menu screen, the control unit 360 of the mobile terminal 200 displays a contents list listing content items. Here, the contents items can be selected from multiple contents lists. In this case, the control unit 360 generates a composite contents list listing the contents items selected from the multiple contents list.

In FIG. 4, the reference number 410 denotes a composite contents list listing the content items for batch RO acquisition. The composite contents list is a list of content items having ROs with constraints that must be updated. The composite contents list can be generated with the contents items queried from a contents database.

The reference number 420 denotes an information window for presenting information on the content item on which the cursor stays. Typically, the content item on which the cursor stays is shown highlighted. The information window shows the name of the content item, a purchase date and price of the RO for the content item, and a current state of usage permission (constraint). The reference number 430 denotes check boxes for selecting content items for which ROs are to be purchased.

The reference number 440 denotes a summary information region for showing a number of selected content items and a total cost of the ROs for the selected content items.

The reference number 450 denotes a menu soft key for calling a menu screen showing options for detailed settings. For example, the user can set the conditions for updating ROs and constraints of the ROs using the submenu options of the menu soft key. The constraints may be usage periods or usage counts.

The reference number 460 denotes a select/cancel soft key for selecting content items from the content list or canceling the selection. By selecting the select/cancel soft key, a mark appears or disappears in the check box of the content item on which the cursor stays.

The reference number 470 denotes a "pre-play" soft key for previewing or pre-listening the content item. The content items are assumed to support pre-play function. In this case, each content item is configured to have a preview (pre-listening) section or provided with a sampled preview (pre-listening) part.

With the RO acquisition mode screen shown in FIG. 4, the user can select at least one content item and set the constraints linked to the at least one selected content item.

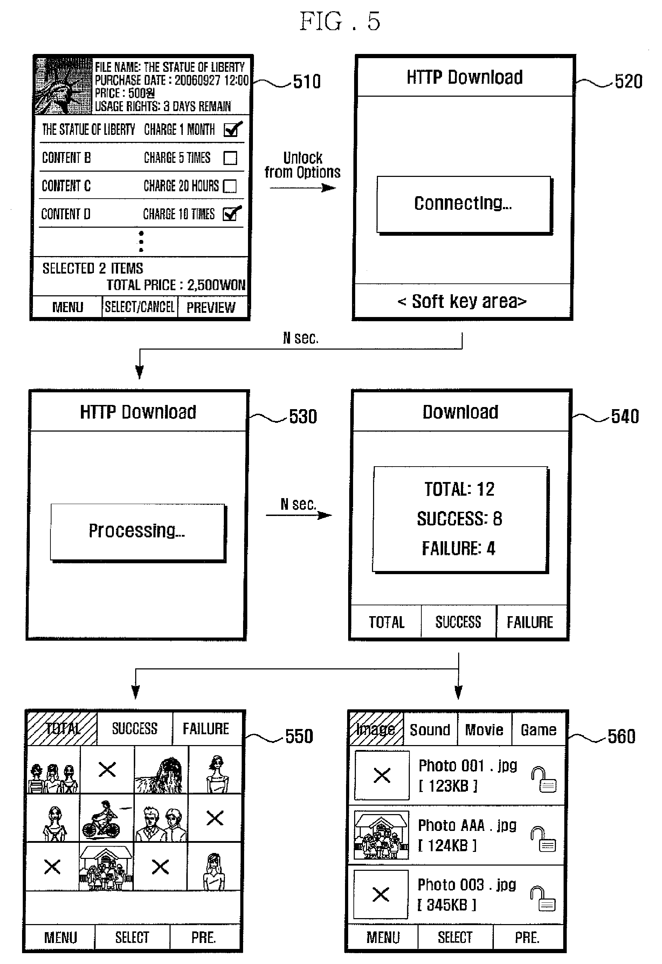

FIG. 5 is a diagram illustrating steps of a batch RO acquisition method according to an exemplary embodiment of the present invention.

Referring to FIG. 5, when a user requests an RO acquisition mode, the control unit 360 of the mobile terminal 200 causes the RO acquisition mode screen 510 to be displayed on the display unit 350. The user can select content items for which ROs are to be acquired on the RO acquisition mode screen 510 and requests an RI for the ROs. While the mobile terminal 200 attempts to connect to the RI, a connection progress screen 520 is displayed. That is, the control unit 360 causes the connection progress to be displayed while establishing a connection to the RI in response to the user command.

Once the connection to the RI is established, the control unit 360 starts downloading the ROs for the DRM content items selected on the RO acquisition mode screen 510. While downloading the ROs, the control unit 360 controls causes a downloading progress screen 530 to be displayed.

After the download of the ROs has completed, the control unit 360 compares the requested ROs with the downloaded ROs and checks the successfully downloaded ROs and download-failed ROs. Next, the control unit 360 causes a download result screen 540 to be displayed that shows the total number of download-requested ROs, a number of successfully downloaded ROs, and a number of the downloaded-failed ROs.

In this embodiment, the download result screen 540 shows that, among twelve download-requested ROs, eight ROs have been successfully downloaded and four ROs have failed to download. The download result screen 540 can be provided with the number of DRM contents items linked to the total, successfully downloaded, and download-failed ROs.

The download result screen 540 can be provided with menu items for selecting a detailed download information display mode. For example, the user can select one of the detailed information display modes: <all> mode for presenting the entire content items for which ROs are requested, <succeeded> mode for presenting the content items for which ROs are successfully downloaded, and <failed> mode for presenting the content items for which ROs are failed to download. Accordingly, the user can check the download result in various manners.

In response to the selection of the <all> mode, the control unit 360 causes the entire content items for which ROs are requested to download. At this time, the content items for which ROs are successfully downloaded and failed to download can be presented distinguishably.

For example, the content items can be categorized by genre, album, and artist and displayed by category. Also, the content items can be classified into movie, music video, audio, game, and picture and displayed by file formats. Also, the ROs can be displayed in the form of a gird or a combination of the above display methods. The download-succeeded and failed ROs can be displayed in a distinct and distinguishable manner as shown in the screen images 550 and 560.

The detailed download result screen 550 shows the content items in the grid manner, and the detailed download result screen 560 shows the contents items in the categorized manner.

As shown in the screen image 550, the content items are displayed distinctively according to whether the ROs for the respective content items have been successfully downloaded or failed to download. The content items can be displayed in the form of thumbnail image. The number of thumbnail images per page can be set by the user. The <all>, <succeeded>, and <failed> display modes can be provided in the form of menu taps.

When displaying the content items by category as shown in the screen image 560, the screen image 560 can be provided with the <all>, <succeeded>, and <failed> taps such that the user can select one of the taps. If a category is selected by the user, the control unit 360 may display a contents list listing the content items corresponding to the selected category. The content list may list the content items in the form of texts or thumbnail images or combinations of texts and thumbnail images. Also, the content items can be displayed in the form of a grid as shown in the screen image 550. When displaying the content items in the form of a list, the content items for which ROs have successfully downloaded and failed to download are displayed distinguishably. The download result display method can be changed using a soft key such as a menu key in real time.

Although not shown in the screen images 550 and 560, each screen may be provided with a soft key for selectively checking the content items that have successfully downloaded and failed to download.

In the case that the user selected one of <succeeded> and <failed> display modes, the detailed download result screen can be displayed in the form of a combination of the screen images 550 and 560. In response to the selection of <succeeded> or <failed> display mode, the control unit 360 displays the content items for which ROs have successfully downloaded and failed to download by category, file format, or content type. In the case of being displayed by category, the content items may be displayed in the form of a grid according to a preset display method.

In a case that an automatic re-download function is activated, the control unit 360 attempts downloading the download-failed ROs automatically when the <failed> display mode is selected. The re-download procedure is performed through the steps corresponding to the screen images 520 and 530. After the re-download procedure has completed, the control unit 360 performs the process described with reference to the screen image 540.

The screen images 550 and 560 also can be provided with a pre-play (preview or pre-listening) menu option such that the user can pre-play a specific content item supporting the pre-play function.

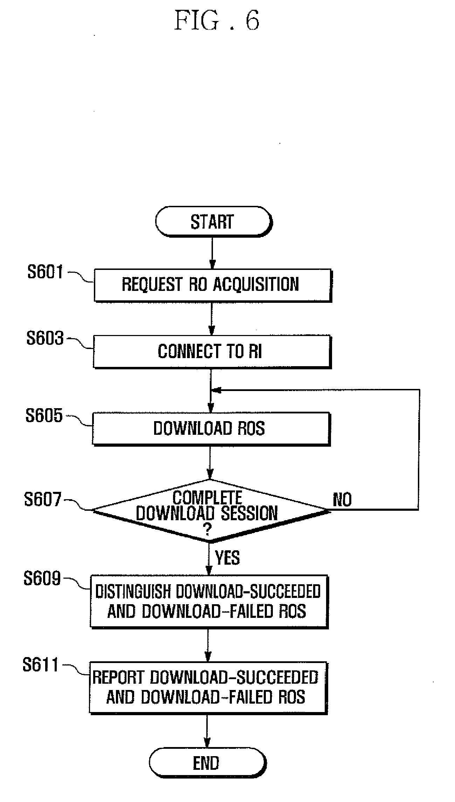

FIG. 6 is a flowchart illustrating a batch RO acquisition procedure of an RO acquisition method according to an exemplary embodiment of the present invention. In the following description, the term "RO acquisition" is used for a procedure including steps of purchasing content items, acquiring ROs for the purchased items, and updating expired ROs.

Referring to FIG. 6, the control unit of a mobile terminal detects an RO acquisition command for requesting ROs for at least one content item (S601). Once the RO acquisition command is detected, the control unit instructs the mobile terminal to access an RI supporting batch RO acquisition (S603) and download the ROs by browsing a website provided by the RI (S605).

Next, the control unit determines whether the download session has completed (S607). If the ROs have not completed, the control unit continues downloading (S605). Once the download session have completed, the control unit classifies the download-requested ROs into successfully downloaded ROs and download-failed ROs (S609). Whether an RO has been successfully downloaded is determined by comparing the requested ROs and the downloaded ROs. The requested ROs having identical downloaded ROs are regarded as successfully downloaded ROs, and the requested ROs having no identical downloaded ROs are regarded as download-failed ROs.

Next, the control unit outputs a download result informing the user of the successfully downloaded ROs and download-failed ROs (S611).

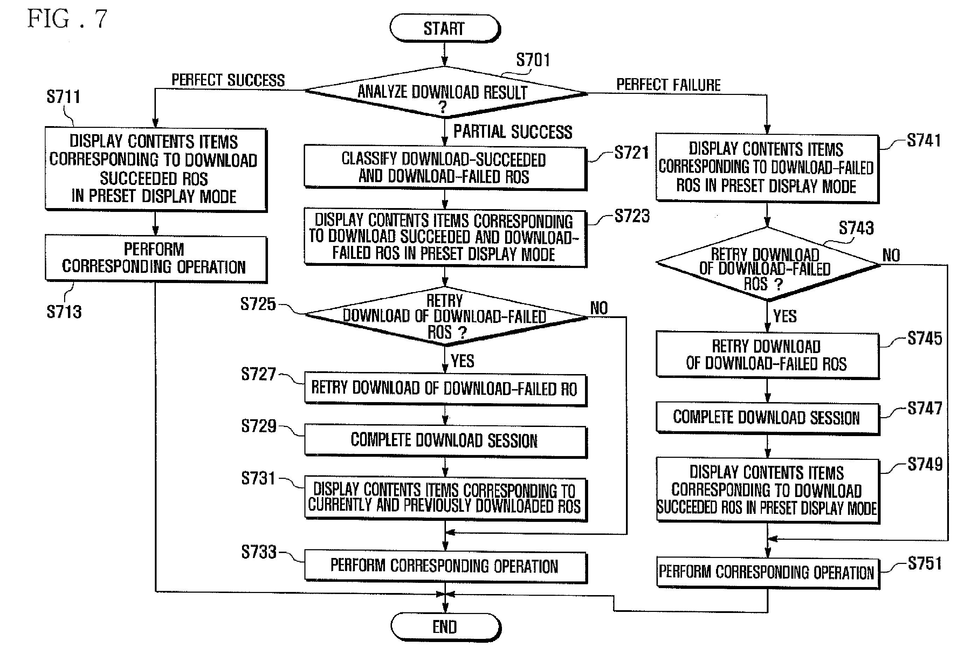

FIG. 7 is a flowchart illustrating a contents objects display procedure of an RO acquisition method according to an exemplary embodiment of the present invention. In FIG. 7, a procedure after the completion of the download session for downloading the requested ROs is described. In the following description, the term "RO acquisition" is used for a procedure including steps of purchasing content items, acquiring ROs for the purchased items, and updating expired ROs.

Referring to FIG. 7, once the download session has completed, the control unit analyzes the download result and categorizes the download result into one of three categories (S701). As described above, the each acquisition-requested RO is checked whether it is successfully downloaded or failed to down. In the meantime, the three download result categories are "perfect success" indicating that all ROs have been successfully downloaded, "partial success" indicating that some ROs have been downloaded but the others have not, and "perfect failure" indicating that all ROs have failed to download.

If it is determined that the download result is "perfect success" at step S701, the control unit causes the download result to be displayed in a download result display mode set by the user (S711). Before displaying the download result, statistical information can be displayed for informing of the numbers of the acquisition-requested ROs, successfully downloaded ROs, and download-failed ROs.

Next, the control unit causes a follow-up process to be performed in response to a user input (S713). The follow-up process can be any of display mode change or reset process, content execution process, new RO acquisition process, and RO acquisition mode termination process.

If it is determined that the download result is "partial success" at step S701, the control unit classifies the ROs into a set of successfully downloaded ROs and a set of download-failed ROs (S721). Next, the control unit displays the download result with the content items corresponding to the successfully downloaded and download-failed ROs in distinguishable manner as shown in FIG. 5 (S723). Before displaying the download result, statistical information can be displayed for informing of the numbers of the acquisition-requested ROs, successfully downloaded ROs, and download-failed ROs.

While displaying the download result, the control unit determines whether a download retry event for requesting download of the download-failed ROs is detected (S725). If a download retry event is detected, the control unit retries download of the download-failed ROs (S727). Here, the download retry can be performed in response to a user command or by an automatic download retry function. That is, the mobile terminal generates and sends an RO request message requesting the RI for the download-failed ROs according to the user command or a preset automatic repeat request function.

Once the download session has completed (S729), the control unit causes the content items corresponding to the re-downloaded ROs to be displayed together with the content items corresponding to the previously downloaded ROs in the preset display mode (S731). Next, the control unit causes a follow-up process to be performed in response to a user input (S733). The follow-up process can be any of display mode change or reset process, content execution process, new RO acquisition process, and RO acquisition mode termination process.

Although the re-download procedure has been explained under the assumption that all download-failed ROs are successfully downloaded through steps S729 and S731, the re-download may fail fully or partially again. In this case, the download failure analysis, download retry, and RO acquisition procedure termination processes can be selectively performed.

Meanwhile, if it is determined that the download result is "perfect failure" at step S701, the control unit displays the content items corresponding to the download-failed ROs in a display mode set by the user as shown in FIG. 5 (S741). Before displaying the download result, statistical information can be displayed for informing of the numbers of the acquisition-requested ROs, successfully downloaded ROs, and download-failed ROs.

While displaying the download result, the control unit determines whether a download retry event is detected (S743). If a download retry event is detected, the control unit retries download of the download-failed ROs (S745). Here, the download retry can be performed in response to a user command or by an automatic download retry function.

Once the download session has completed (S747), the control unit controls causes the content items corresponding to the successfully downloaded ROs to be displayed in a preset display mode (S749). Next, the control unit causes a follow-up process to be performed in response to a user input (S751). The follow-up process can be any of a display mode change or reset process, a content execution process, a new RO acquisition process, and an RO acquisition mode termination process.

Although the re-download procedure has been explained under the assumption that all download-failed ROs are successfully downloaded through steps S747 and S749, the re-download may fail fully or partially again. In this case, the download failure analysis, download retry, and RO acquisition procedure termination processes can be selectively performed.

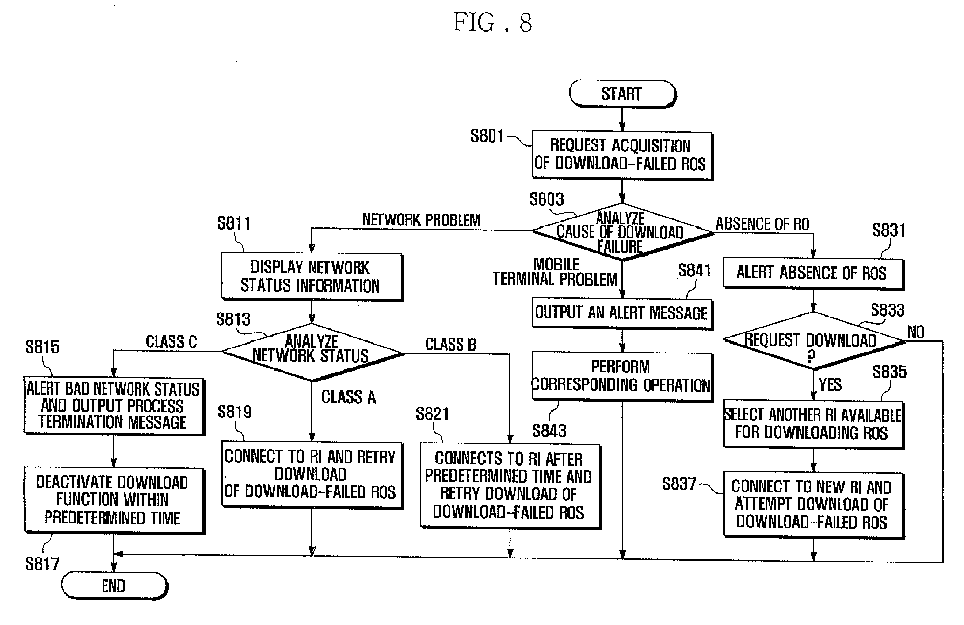

FIG. 8 is a flowchart illustrating a download-failed RO acquisition procedure of an RO acquisition method according to an exemplary embodiment of the present invention.

Referring to FIG. 8, when an acquisition retry event for retrying download of the download-failed ROs is detected (S801), the control unit analyzes the cause of the RO download failure (S803). The acquisition retry event can be a detection of a user request or an interrupt generated by an automatic repeat request function. The cause of the RO download failure can be any of a network problem, a target RO absence, and a problem with the mobile terminal.

When the cause of the download failure is a network problem, the control unit causes a network status information to be displayed (S811). The network status can be displayed with one of several channel status level between the mobile terminal and the RI.

For example, the network status may be classified into A class, B class, and C class. Class A indicates that the channel quality between the mobile terminal and RI is very good, Class B indicates that the channel quality between the mobile terminal and RI is good, and Class C indicates that the channel quality between the mobile terminal and RI is bad. The channel qualities of "very good," "good," and "bad" are determined with the threshold values defining the respective signal strength ranges.

Although the network status is classified into three classes in this embodiment, the present invention is not limited thereto. For example, the network status can be classified into two or four classes according to the network characteristics.

If it is determined that the network status is Class A, the control unit considers the communication channel between the mobile terminal and the RI to be very good and attempts to connect to the RI.

If it is determined that the network status is Class B, the control unit considers the communication channel to be good between the mobile terminal and the RI. In this case, the control unit instructs the mobile terminal to wait for a predetermined time period and then attempt to connect to the RI. When the network status is Class B, it is regarded that a download error may occur, whereby the control unit checks the network status within a predetermined period and then attempts to connect to the RI.

Meanwhile, if it is determined that the network status is Class C, the control unit considers the communication channel between the mobile terminal and the RI to be unstable such that connection to the RI is impossible. In this case, the control unit instructs the mobile terminal to quit attempting connection to the RI.

After displaying the network status information at step S811, the control unit analyzes the network status (S813). If the network status is Class C, the control unit outputs an alert message notifying that the network status is too bad to connect to the RI (S815). For example, an alert message saying "Network connection is impossible. Try again later." is displayed in the form of a popup window. Next, the control unit deactivates the download function within a predetermined time (S817).

If the network status is Class A at step S813, the control unit attempts to connect to the RI for downloading the download-failed ROs through web browsing (S819).

If the network status is Class B, the control unit waits for a predetermined time period and then attempts to connect to the RI for downloading the download-failed ROs (S821).

In the meantime, if it is determined that the cause of the download failure is the absence of a target RO at step S803, the control unit causes an alert message to be displayed notifying that the target ROs do not exist in the RI (S831). Next, the control unit determines whether a forced download command is input (S833). If a forced download command is input, the control unit searches for another available RI providing the target ROs (835). The forced download command can be generated by a user input or the automatic repeat request function.

The available RI can be selected from the RI URL information contained in the content item corresponding to the target ROs or stored in the memory unit of the mobile terminal. Once an available RI is selected, the control unit connects to the RI and retries downloading the download-failed ROs (S837).

If it is determined that the cause of the download failure is a client problem, the control unit causes an alert message to be displayed notifying that the download failure is caused by the mobile terminal itself (S841).

Next, the control unit performs a follow-up process in response to the user's command (S843). The follow-up process can be any of deleting previously stored data and terminating RO acquisition mode. After completing the follow-up process, downloading the download-failed RO may be retried manually or automatically later.

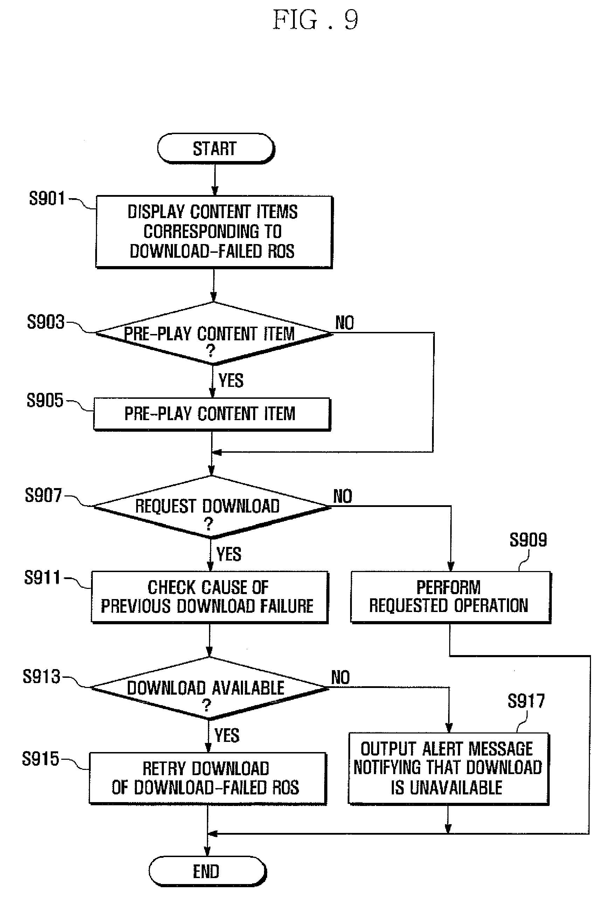

FIG. 9 is a flowchart illustrating a download-failed RO processing procedure of an RO acquisition method according to an exemplary embodiment of the present invention.

Referring to FIG. 9, the control unit causes, in response to a user command, the contents items corresponding to the download-failed ROs to be displayed in a predetermined display mode (S901). Next, the control unit determines whether a pre-play command for playing a pre-play (preview or pre-listening) part of at least one of displayed content items is input (S903). If a pre-play command input has been detected, the control unit causes the pre-play part of the selected content item to be pre-played (S905). In this embodiment, each content item is provided with a pre-play part. That is, even though their ROs have expired, the content items can be played within their pre-play parts.

Next, the control unit detects a user command input while pre-playing the content item and determines whether the user command is a download command for requesting acquisition of the RO corresponding to the currently pre-playing content item (S907). If the user command is not the download command, the control unit performs an operation corresponding to the user command (S909). The user command can be an RO acquisition procedure termination command or a pre-play termination command.

Otherwise, if the user command is the download command at step S907, the control unit checks the reason for the previous download failure (S911) and then determines whether the download of the RO for the currently pre-playing content item is available (S913).

The reason of the download failure can be a bad network status, an absence of the target RO in the RI, or a lack of storage space on the mobile terminal. The control unit can determine whether the download of the RO is available on the basis of the network status, whether the RO exists in the RO, and whether the storage space on the mobile terminal is enough to store the RO.

If it is determined that the download of the RO is available, the control unit attempts to download the download-failed RO again (S915). Otherwise, if it is determined that the download of the RO is unavailable, the control unit causes an alert message notifying the unavailability of the RO download to be displayed (S917).

Similar to the pre-play parts of the content items for which ROs have failed to download, the content items for which ROs have successfully downloaded have pre-play parts.

As described above, the RO acquisition method of the present invention allows acquiring multiple ROs for a plurality of content items in a batch processing manner, resulting in improvement of user convenience. Also, the RO acquisition method of the present invention reduces a number of repetitive acquiring/updating processes, thereby reducing the time for acquiring multiple ROs and improving user convenience.

Although the present disclosure has been described with an exemplary embodiment, various changes and modifications may be suggested to one skilled in the art. It is intended that the present disclosure encompass such changes and modifications as fall within the scope of the appended claims.

## Claims

1. A rights objects acquisition method for a mobile terminal supporting digital rights management, comprising:
attempting a download of acquisition-requested rights objects for at least one contents object;
classifying the acquisition-requested rights objects into download-succeeded rights objects that have successfully downloaded and download-failed rights objects that have failed to download; and
outputting an information on the downloaded-succeeded rights objects and the download-failed rights objects.

2. The rights objects acquisition method of claim 1, further comprising displaying contents objects corresponding to the acquisition-requested rights objects, content objects corresponding to the download-succeeded rights objects, or contents objects corresponding to the download-failed rights objects, in a preset display mode.

3. The rights objects acquisition method of claim 2, wherein the preset display mode one of a category-sorted display mode, a file format-sorted display mode, and a grid display mode, and the contents objects corresponding to the download-succeeded rights objects and the download-failed rights objects are displayed distinguishably from each other.

4. The rights objects acquisition method of claim 3, wherein the contents objects are displayed in the form of thumbnail images.

5. The rights objects acquisition method of claim 3, wherein the category-sorted display mode, the file format-sorted display mode, and the grid display mode are provided with one or more taps linked to respective display mode pages.

6. The rights objects acquisition method of claim 2, further comprising:
checking an availability of the download of the download-failed rights objects; and
starting, when downloading the download-failed rights objects is available, a download of the download-failed rights objects.

7. The rights objects acquisition method of claim 6, wherein checking an availability of the download comprises:
checking a channel status between the mobile terminal and a server, an existence of download-failed rights objects in the server, and a storage space on the mobile terminal; and
determining the availability of download according to a result of the checking.

8. The rights objects acquisition method of claim 2, further comprising:
checking a download status of the acquisition-requested rights objects;
displaying, when all the acquisition-requested rights objects have successfully downloaded, at least one content item corresponding to the download-succeeded rights objects in a preset display mode;
displaying, when some of the acquisition-requested rights objects have successfully downloaded and the others have not, contents items corresponding to the download-succeeded rights objects and the download-failed rights objects distinguishably from each other in a preset display mode; and
displaying, when all the acquisition-requested rights objects have failed to download, at least one content item corresponding to the download-failed rights objects in a preset display mode.

9. The rights objects acquisition method of claim 8, further comprising:
determining whether a download retry command is detected while displaying the contents items corresponding to the download-succeeded rights objects and the download-failed rights objects; and
retrying, when a download retry command is detected, the download of the download-failed rights objects.

10. The rights objects acquisition method of claim 9, wherein retrying the download of the download-failed rights objects comprises:
analyzing a cause of the download failure of the download-failed rights objects;
performing, when the cause is a network status, an operation corresponding to the network status;
outputting, when the cause is a problem with the mobile terminal, an alert message alerting the problem with the mobile terminal; and
accessing, when the cause is an absence of the download-failed rights objects in a server, another server providing the download-failed rights objects.

11. The rights objects acquisition method of claim 10, wherein the operation corresponding to the network status can be one of retrying the download of the download-failed rights objects, retrying the download of the download-failed rights objects after a predetermined time period, and alerting of a bad network status and terminating the rights object acquisition process.

12. The rights objects acquisition method of claim 8, further comprising:
detecting a pre-play command on at least one contents items corresponding to a download-succeeded or a download-failed rights object; and
pre-playing a pre-playing part sampled from the contents item indicated by the pre-play command.

13. A mobile terminal comprising:
a radio frequency unit which receives radio signals carrying contents objects and rights objects for the contents objects;
a memory unit which stores a user interface to enable acquiring multiple rights objects for the contents objects at one time, the contents objects, an information of the contents objects, and the rights objects;
a display unit which displays screen images of the user interface, a web browsing application, and a download progress status; and
a control unit which controls acquiring rights objects, classifying the acquisition-requested rights objects into download-succeeded rights objects that have successfully downloaded and download-failed rights objects that have failed to download, outputting an alert message for alerting success and failure of downloading the rights objects, analyzing a cause of the download failure of the download-failed rights objects, and determining whether to retry the download of the downloaded-failed rights objects according to the analysis result.

14. The mobile terminal of claim 13, wherein the control unit controls a display of the contents objects corresponding to the download-succeeded rights objects and the download-failed rights objects distinguishably from each other.

15. The mobile terminal of claim 14, wherein the control unit compares the acquisition-requested rights objects and the downloaded rights objects and designates the acquisition-requested rights objects having identical downloaded rights objects to the download-succeeded rights objects and the acquisition-requested rights objects having no identical downloaded rights objects to download-failed rights objects.
